# EUROPEAN PATENT APPLICATION

(11) **EP 2 383 987 A1**
(43) Date of publication of application: **02.11.2011**
(21) Application number: 11163825.0
(22) Date of filing: 27.04.2011
(51) Int. Cl.: H04N 5/445

(54) **Image receiver with network function**

(30) Priority: 28.04.2010 JP 2010104072
(71) Applicant: Funai Electric Co., Ltd., Daito-shi, Osaka 574-0013 (JP)
(72) Inventor: Tsukada, Seiji, Daito-shi Osaka 574-0013 (JP)
(74) Representative: Grünecker, Kinkeldey, Stockmair & Schwanhäusser

(57) **Abstract**

This image receiver with a network function includes a control portion (11, 401) controlling a display portion (1) to display a service menu screen (1a) at least partially displaying a plurality of network services in the order of use counts (lowest first) or the dates of use (oldest first) at least on the basis of the use counts or the dates of use of the plurality of network services used by the user.

## Description

### BACKGROUND OF THE INVENTION

### Field of the Invention

The present invention relates to an image receiver with a network function, and more particularly, it relates to an image receiver with a network function capable of communicating with an external service provider for receiving a plurality of network services therefrom.

### Description of the Background Art

In general, an image receiver with a network function capable of communicating with an external service provider for receiving a plurality of network services therefrom is disclosed in each of Japanese Patent Laying-Open No. 2009-145935 and Japanese Patent Laying-Open No. 2003-323569, for example.

The aforementioned Japanese Patent Laying-Open No. 2009-145935 discloses an advertising information providing system including an advertising information providing server holding advertising information or map information (network service) and a terminal unit (image receiver with a network function) capable of receiving the advertising information or the map information from the advertising information providing server through a network. The advertising information providing system is so formed that the user can receive (use) the advertising information or the map information from the advertising information providing server by requesting the advertising information providing server to provide him/her with the advertising information or the map information by operating the terminal unit. Further, the advertising information providing system is so formed that a display portion of the terminal unit displays the advertising information or the map information in the order of display counts (lowest first) on the basis of display count information on the advertising information or the map information held by the advertising information providing server. As to the order of the dates of use, Japanese Patent Laying-Open No. 2009-145935 does not describe whether the display portion displays the advertising information or the map information from that exhibiting the newest date of use or that exhibiting the oldest one.

The aforementioned Japanese Patent Laying-Open No. 2003-323569 discloses an advertisement distribution system including a server holding advertising information (network service) and a terminal unit (image receiver with a network function) capable of receiving the advertising information from the server through a network. This advertisement distribution system is so formed that the user can receive (use) the advertising information by requesting the server to provide him/her with the advertising information by operating the terminal unit. Further, the advertisement distribution system is so formed that a display portion of the terminal unit displays advertising information exhibiting the lowest distribution count on the basis of distribution count parameters indicating the distribution counts of the advertising information held by the server. As to the order of the dates of use, Japanese Patent Laying-Open No. 2003-323569 does not describe whether the display portion displays the advertising information from that exhibiting the newest date of use or that exhibiting the oldest one.

In the advertising information providing system disclosed in the aforementioned Japanese Patent Laying-Open No. 2009-14503, however, the display portion displays the advertising information or the map information in the order of the display counts (lowest first) on the basis of the display count information, held by the advertising information providing server, about overall users. Therefore, the display portion does not display the advertising information or the map information (network service) on the basis of the situation of the corresponding user. Thus, it is difficult to prompt each user to use advertising information or map information (network service) exhibiting a low use count or an old date of use.

In the advertisement distribution system disclosed in the aforementioned Japanese Patent Laying-Open No. 2003-323569, the display portion displays advertising information exhibiting the lowest distribution count on the basis of the distribution count parameters, held by the server, about overall users. Therefore, the display portion does not display the advertising information on the basis of the situation of the corresponding user. According to Japanese Patent Laying-Open No. 2003-323569, therefore, it is difficult to prompt each user to use advertising information (network service) exhibiting a low use count or an old date of use, similarly to the aforementioned Japanese Patent Laying-Open No. 2009-145935.

### SUMMARY OF THE INVENTION

The present invention has been proposed in order to solve the aforementioned problems, and an object of the present invention is to provide an image receiver with a network function capable of prompting each user to use a network service exhibiting a low use count or an old date of use among a plurality of network services.

An image receiver with a network function according to an aspect of the present invention includes a communication portion connected to a network and capable of communicating with an external service provider for receiving a plurality of network services provided by the external service provider through the network and a control portion controlling a display portion to display a service menu screen at least partially displaying the plurality of network services in the order of use counts (lowest first) or the dates of use (oldest first) at least on the basis of the use counts or the dates of use of the plurality of network services used by the user.

In the image receiver with a network function according to the aspect, as hereinabove described, the control portion is so formed as to control the display portion to display the service menu screen at least partially displaying the plurality of network services in the order of use counts (lowest first) or the dates of use (oldest first) at least on the basis of the use counts or the dates of use of the plurality of network services used by the user so that the display portion can conspicuously display a network service, conceivably less frequently used by the user, exhibiting a low use count or a network service, conceivably not recently used by the user, exhibiting an old date of use among the plurality of network services, whereby the user's awareness of the network service exhibiting the low use count or the old date of use can be improved. Thus, the network service exhibiting the low use count or the old date of use is easy to select, whereby the user can be prompted to use the network service, conceivably less frequently used by the user, exhibiting the low use count or the network service, conceivably not recently used by the user, exhibiting the old date of use.

In the aforementioned image receiver with a network function according to the aspect, the control portion is preferably formed to classify the plurality of network services at least into a first group exhibiting use counts lower than a first threshold and a second group exhibiting use counts not less than the first threshold and to control the display portion to display the network services belonging to the first group in the order of the use counts (lowest first) and to thereafter display the network services belonging to the second group. According to this structure, the display portion can conspicuously display a network service, conceivably least frequently used by the user, exhibiting the lowest use count among the network services, conceivably less frequently used by the user, belonging to the first group exhibiting the low use counts, whereby the user's awareness of the network service, conceivably least frequently used by the user, exhibiting the lowest use count can be improved.

In this case, the first threshold is preferably set with reference to the network service exhibiting the highest use count among the plurality of network services, and the control portion is preferably formed to classify the plurality of network services at least into the first group exhibiting the use counts lower than the first threshold set with reference to the network service exhibiting the highest use count among the plurality of network services and the second group exhibiting the use counts not less than the first threshold. According to this structure, the control portion can easily classify the plurality of network services into the first group exhibiting the use counts lower than the first threshold and the second group exhibiting the use counts not less than the first threshold with the first threshold set with reference to the network service exhibiting the highest use count.

In the aforementioned image receiver with a network function having the control portion classifying the plurality of network services at least into the first group and the second group, the control portion is preferably so formed as to control the display portion to display the network services belonging to the second group in the order of the dates of use (oldest first). According to this structure, the display portion can conspicuously display the network service, conceivably least frequently used by the user, exhibiting the oldest date of use among the network services belonging to the second group, whereby the user's awareness of the network service, conceivably least frequently used by the user, exhibiting the oldest date of use can be improved.

In the aforementioned image receiver with a network function having the control portion classifying the plurality of network services at least into the first group and the second group, the control portion is preferably formed to classify the plurality of network services further into a third group exhibiting use counts not less than a second threshold higher than the first threshold in addition to the first group and the second group and to control the display portion to display the network services belonging to the third group at random regardless of the use counts or the dates of use by the user after displaying the network services belonging to the first group and the network services belonging to the second group. According to this structure, the control portion can control the display portion to display the network services belonging to the third group without prioritizing the same.

In the aforementioned image receiver with a network function having the control portion classifying the plurality of network services at least into the first group, the second group and the third group, the network services belonging to the first group preferably include hardly used network services, the network services belonging to the second group preferably include ordinarily used network services, the network services belonging to the third group preferably include frequently used network services, and the control portion is preferably formed to classify the plurality of network services into the hardly used network services belonging to the first group, the ordinarily used network services belonging to the second group and the frequently used network services belonging to the third group and to control the display portion to display the hardly used network services belonging to the first group, the ordinarily used network services belonging to the second group and the frequently used network services belonging to the third group in this order. According to this structure, the control portion can control the display portion to display the network services to be conspicuous in the order of the hardly used network services belonging to the first group, the ordinarily used network services belonging to the second group and the frequently used network services belonging to the third group, whereby the user's awareness of the hardly used network services, conceivably least frequently used by the user, belonging to the first group can be improved.

In the aforementioned image receiver with a network function having the control portion classifying the plurality of network services at least into the first group and the second group, the control portion is preferably formed to determine whether or not the network services include the network services belonging to the first group, to create a priority display service array by arraying at least the network services belonging to the first group in the order of the use counts (lowest first) when determining that the network services include the network services belonging to the first group, and to control the display portion to display the network services in the order of the use counts (lowest first) according to the priority display service array. According to this structure, the control portion can easily control the display portion to conspicuously display the network service, conceivably least frequently used by the user, exhibiting the lowest use count among the network services belonging to the first group.

In this case, the control portion is preferably formed to determine whether or not the network services include the network services belonging to the first and second groups, to create the priority display service array by arraying the network services belonging to the first group in the order of the use counts (lowest first) and thereafter arraying the network services belonging to the second group in the order of the dates of use (oldest first) when determining that the network services include the network services belonging to the first and second groups, and to control the display portion to display the network services according to the priority display service array. According to this structure, the control portion can easily control the display portion to display the network services by arraying the network services belonging to the first group in the order of the use counts (lowest first) and thereafter arraying the network services belonging to the second group in the order of the dates of use (oldest first) by employing the priority display service array.

In the aforementioned image receiver with a network function having the control portion determining whether or not the network services include the network services belonging to the first group, the control portion is preferably formed to determine whether or not the network services include the network services belonging to the first group, to create the priority display service array by arraying the network services belonging to the second group in the order of the dates of use (oldest first) when determining that the network services do not include the network services belonging to the first group, and to control the display portion to display the network services in the order of the dates of use (oldest first) according to the priority display service array. According to this structure, the control portion can easily control the display portion to conspicuously display the network service, conceivably least frequently used by the user, exhibiting the oldest date of use among the network services belonging to the second group.

In this case, the image receiver with a network function preferably further includes a storage portion for storing the priority display service array created from the use counts and the dates of use of the network services in a table form. According to this structure, the control portion can control the display portion to display the network services by arraying the plurality of network services in the order of the use counts (lowest first) and in the order of the dates of use (oldest first) on the basis of the use counts and the dates of use of the network services in the priority display service array in the table form stored in the storage portion.

In the aforementioned image receiver with a network function including the storage portion, the priority display service array in the table form is preferably so formed that the storage portion stores the plurality of network services in association with the use counts and the dates of use thereof respectively. According to this structure, the control portion can easily control the display portion to display the network services by arraying the plurality of network services in the order of the use counts (lowest first) and in the order of the dates of use (oldest first) on the basis of the use counts and the dates of use associated with the respective ones of the network services in the priority display service array in the table form stored in the storage portion.

In the aforementioned image receiver with a network function according to the aspect, the control portion is preferably so formed as to control the display portion to list the plurality of network services on the service menu screen displayed thereon from the head of the service menu screen in the order of use counts (lowest first) or the dates of use (oldest first). According to this structure, the display portion displays the network service exhibiting the lowest use count or the oldest date of use among the plurality of network services at the head of the service menu screen, whereby the control portion can control the display portion to conspicuously display the network service, conceivably least frequently used by the user, exhibiting the lowest use count or the network service, conceivably least frequently used by the user, exhibiting the oldest date of use among the plurality of network services.

In this case, the control portion is preferably so formed as to control the display portion to display the network service exhibiting the lowest use count among the plurality of network services at the head of the service menu screen and to thereafter successively display the network service exhibiting the next lowest use count among the plurality of network services at the head of the service menu screen every time the display portion displays the service menu screen in response to the user's operation. According to this structure, the control portion can control the display portion to conspicuously display not only the network service exhibiting the lowest use count but also the network service exhibiting the next lowest use count among the plurality of network services.

In the aforementioned image receiver with a network function according to the aspect, the control portion is preferably so formed as to control the display portion to display the network services exhibiting use counts lower than a prescribed count in the order of the use counts (lowest first) when the plurality of network services include the network services exhibiting the use counts lower than the prescribed count. According to this structure, the control portion can control the display portion to conspicuously display any network service when the use count thereof is particularly low.

The aforementioned image receiver with a network function according to the aspect preferably further includes a storage portion for storing use counts and the dates of use of the network services, and the control portion is preferably formed to add one to the use count of the used network service, to update the corresponding date of use and to control the storage portion to store the use count and the date of use every time the user uses any of the plurality of network services. According to this structure, the control portion can control the display portion to display the network services by arraying the plurality of network services in the order of the use counts (lowest first) and in the order of the dates of use (oldest first) on the basis of the use counts and the dates of use of the respective network services stored in the storage portion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing a liquid crystal television set and a remote control according to an embodiment of the present invention;
Fig. 2 is a block diagram showing the liquid crystal television set and the remote control according to the embodiment of the present invention;
Figs. 3 and 4 illustrate a service menu screen displayed on a display portion of the liquid crystal television set according to the embodiment of the present invention;
Fig. 5 illustrates the contents of a priority display service array table in the liquid crystal television set according to the embodiment of the present invention;
Fig. 6 is a flow chart showing the flow of control processing performed by a control portion when the user uses a network service in the liquid crystal television set according to the embodiment of the present invention;
Fig. 7 is a flow chart showing control processing performed by the control portion for controlling the display screen to display the service menu screen in the liquid crystal television set according to the embodiment of the present invention; and
Fig. 8 is a block diagram showing a liquid crystal television set, an STB (settop box) and a remote control according to a modification of the embodiment of the present invention.

### DESCRIPTION OF THE PREFERRED EMBODIMENTS

An embodiment of the present invention is now described with reference to the drawings.

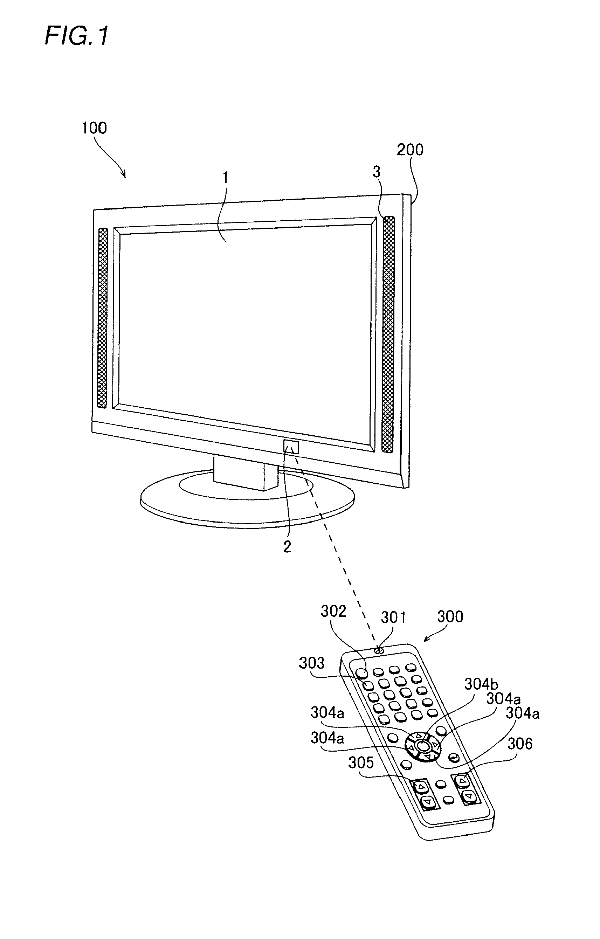

First, the structure of an image output system 100 according to the embodiment of the present invention is described with reference to Figs. 1 to 5.

The image output system 100 according to this embodiment includes a liquid crystal television set 200 including a display portion 1 and a remote control 300 for operating a service menu screen 1a, described later, displayed on the display portion 1 of the liquid crystal television set 200, as shown in Fig. 1. The liquid crystal television set 200 is an example of the "image receiver with a network function" in the present invention. The liquid crystal television set 200 further includes an infrared light receiving portion 2 for communicating with the remote control 300 through infrared light and a speaker portion 3 generating sounds.

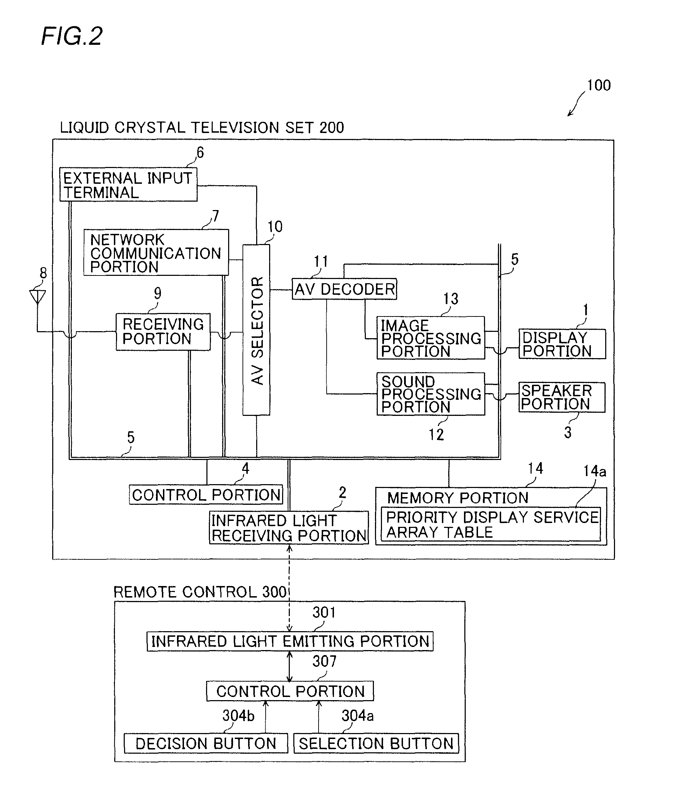

As shown in Fig. 2, the liquid crystal television set 200 includes a control portion 4 controlling the overall liquid crystal television set 200. The control portion 4 is connected to the infrared light receiving portion 2, an external input terminal 6, a network communication portion 7 communicating with an external service provider for receiving a plurality of network services provided therefrom through a network such as the Internet, a receiving portion 9 for receiving a digital television broadcast signal distributed from a broadcast station through an antenna 8, an AV selector 10, an AV decoder 11, a sound processing portion 12, an image processing portion 13 and a memory portion 14 for storing use counts and the dates of use of the network services through buses (transmission paths) 5. According to this embodiment, the plurality of network services include seven network services A, B, C, D, E, F and G capable of providing services such as a VOD (video on demand) network service allowing the user to view various image contents, a mail-order service and the like. The memory portion 14 is an example of the "storage portion" in the present invention, and the network communication portion 7 is an example of the "communication portion" in the present invention.

The respective portions of the liquid crystal television set 200 are connected with each other through the buses (transmission paths) 5, to be capable of transferring control signals and control data to each other. The external input terminal 6, the network communication portion 7 and the receiving portion 9 are connected to the AV selector 10 having a function of switching input/output of image and sound signals.

The AV selector 10 is connected to the AV decoder 11 for decoding the image and sound signals received fro the receiving portion 9. The AV decoder 11 has a function of decoding (the codes of) the image signal and the sound signal separated by the AV selector 10 respectively and generating image data and sound data.

The AV decoder 11 is connected to the sound processing portion 12 processing the sound signal received from the AV decoder 11 and the image processing portion 13 processing the image signal received from the AV decoder 11. The sound processing portion 12, controlled by the control portion 4, has a function of outputting sounds of a digital television broadcast program or the like to the speaker portion 3 after performing D/A conversion (digital-to-analog conversion). The image processing portion 13 is connected to the display portion 1.

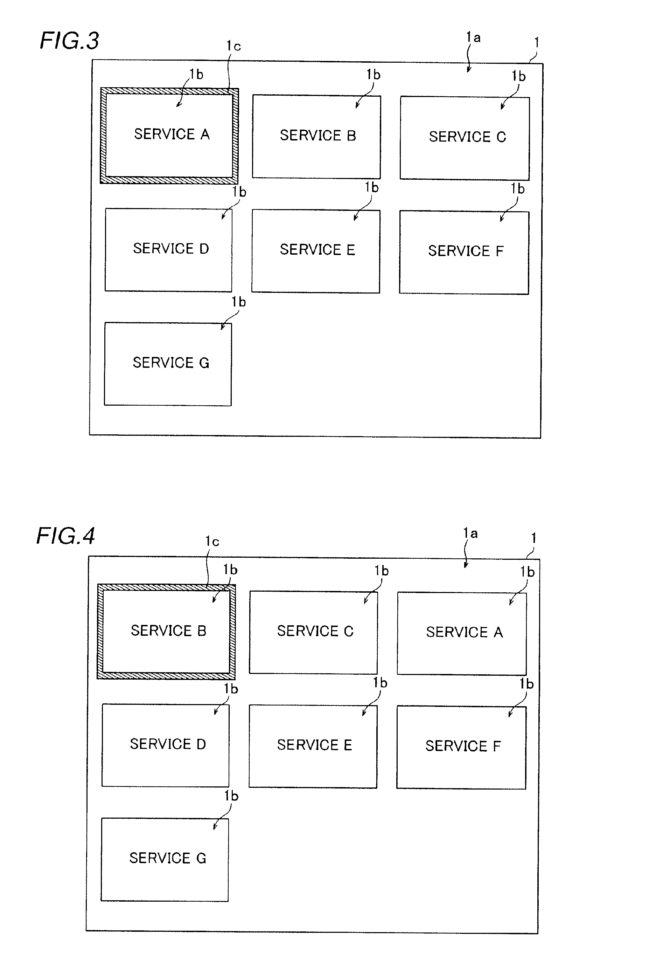

According to this embodiment, the display portion 1 is formed to display the service menu screen 1a on the basis of the user's operation on the remote control 300, as shown in Fig. 3. The service menu screen 1a lists icons 1b corresponding to the seven network services A, B, C, D, E, F and G respectively. The service menu screen 1a is formed to list the icons 1b from the head (upper left) thereof in the order of the use counts (lowest first) or the dates of use (oldest first) of the seven network services A, B, C, D, E, F and G. The user least frequently uses the network service A, and successively uses the network services B, C, D, E, F and G in this order.

The user can select and decide any of the network services A, B, C, D, E, F and G on the service menu screen 1a by operating the remote control 300. When the user operates the remote control 300, the service menu screen 1a displays a cursor 1c to surround the icon 1b corresponding to the network service A, selected from among the seven network services A to G.

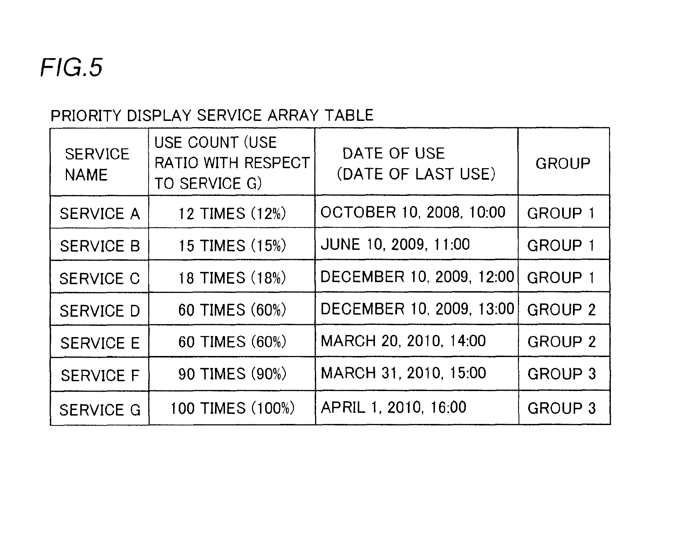

The memory portion 14 is so formed, every time the user decides (uses) the icon 1b corresponding to any of the seven network services A, B, C, D, E, F and G displayed on the service menu screen 1a, as to add one to the use count of the corresponding network service A, B, C, D, E, F or G, update the date of use thereof and store the same, as shown in Fig. 2. Further, the memory portion 14 is formed to store the use counts and the dates of use in association with the respective ones of the seven network services A, B, C, D, E, F and G as a priority display service array table 14a, as shown in Fig. 5. The priority display service array table 14a is an example of the "priority display service array" in the present invention.

The control portion 4 is formed to classify the seven network services A to G into three groups (groups 1, 2 and 3) with reference to the network service G exhibiting the highest use count among the seven network services A to G. More specifically, the control portion 4 is formed to classify the network services exhibiting use ratios of at least 0 % and less than 20 % into the group 1 (hardly used network services), those exhibiting use ratios of at least 20 % and less than 80 % into the group 2 (ordinarily used network services) and those exhibiting use ratios of at least 80 % and not more than 100 % into the group 3 (frequently used network services), assuming that the use count of the most frequently used network service (service G) is 100 %. The groups 1, 2 and 3 are examples of the "first group", the "second group" and the "third group" in the present invention respectively. In the case where the use count of the most frequently used network service G is 100 %, the use ratio of 20 % is an example of the "first threshold" in the present invention, and the use ratio of 80 % is an example of the "second threshold" in the present invention.

In other words, the network services A, B and C (exhibiting use ratios of 12 %, 15 % and 18 % respectively) belong to the group 1 (hardly used network services), the network services D and E (exhibiting use ratios of 60 % respectively) belong to the group 2 (ordinarily used network services) and the network services F and G (exhibiting use ratios of 90 % and 100 % respectively) belong to the group 3 (frequently used network services).

The control portion 4 is so formed as to control the memory portion 14 to create the priority display service array table 14a by arraying the network services A to C belonging to the group 1 (hardly used network services) in the order of the use counts (lowest first, i.e., in the order of the service A (use count: 12 times), the service B (use count: 15 times) and the service C (use count: 18 times)), so that the display portion 1 displays the network services A to C on the service menu screen 1a in this order according to the contents of the priority display service array table 14a.

The control portion 4 is so formed, every time the user operates the remote control 300 to display the service menu screen 1a on the display portion 1, as to switch the corresponding one of the three network services A to C belonging to the group 1 displayed at the head (upper left) of the service menu screen 1a. More specifically, the control portion 4 is so formed as to control the display portion 1 to first display the network service A, exhibiting the lowest use count among the three network services A to C belonging to the group 1, at the head (upper left) of the service menu screen 1a and to thereafter display the network service B, exhibiting the next lowest use count among the three network services A to C belonging to the group 1, at the head (upper left) of the service menu screen 1a when the user subsequently operates the remote control 300 to display the service menu screen 1a on the display portion 1.

In other words, the control portion 4 is so formed as to control the display portion 1 to first display the network services A to C in this order and to thereafter display the same in the order of the network services B, C and A as shown in Fig. 4 when the user subsequently operates the remote control 300 to display the service menu screen 1a on the display portion 1.

The control portion 4 is so formed as to control the memory portion 14 to create the priority display service array table 14a by arraying the network services D and E belonging to the group 2 (ordinarily used network services) in the order of the dates of use (oldest first, i.e., in the order of the network service D (date of use: December 10, 2009) and the network service E (date of use: March 20, 2010)), so that the display portion 1 displays the network services D and E in this order according to the contents of the priority display service array table 14a.

The control portion 4 is so formed as to control the display portion 1 to display the network services F and G belonging to the group 3 (frequently used network services) without prioritizing the same (at random), regardless of the use counts or the dates of use by the user. In other words, the display portion 1 may display the network services F and G in this order or in reverse order.

As shown in Fig. 1, the remote control 300 includes an infrared light emitting portion 301 for transmitting a signal to the infrared light receiving portion 2 of the liquid crystal television set 200 when the user operates the remote control 300, a power supply button 302 for turning on/off the liquid crystal television set 200, a plurality of channel selection buttons 303, four cross-key selection buttons 304a for selecting the display contents of the service menu screen 1a (see Fig. 3) displayed on the display portion 1 of the liquid crystal television set 200, a decision button 304b for deciding the display contents, volume control buttons 305 and channel up/down buttons 306.

As shown in Fig. 2, the remote control 300 further includes a control portion 307 controlling the overall remote control 300. The control portion 307 is connected to the infrared light receiving portion 301, the selection buttons 304a and the decision button 304b.

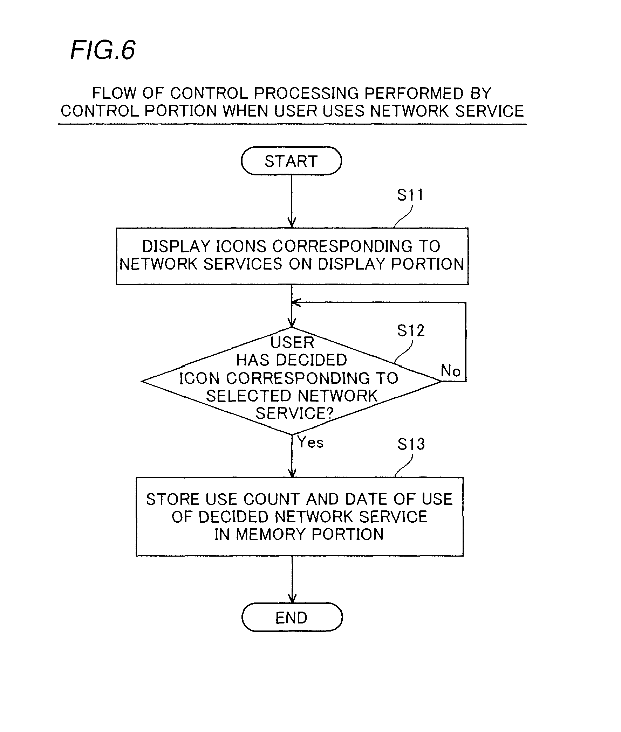

The flow of control processing performed by the control portion 4 of the liquid crystal television set 200 when the user uses (decides) any network service is now described with reference to Figs. 1 to 3 and 6.

When the user selects and decides a service menu in a main menu (not shown) with any of the selection buttons 104a and the decision button 304b of the remote control 300, the control portion 4 controls the display portion 1 to display the service menu screen 1a (see Fig. 3) including the icons 1b corresponding to the respective ones of the seven network services A to G at a step S11. At a step S12, the control portion 4 determines whether or not the user has used (decided) any of the seven network services A to G by operating any of the selection buttons 104a and the decision button 304b (see Fig. 1) of the remote control 300.

If determining that the user has used (decided) none of the seven network services A to G at the step S12, the control portion 4 repeats this determination. If determining that the user has used (decided) any of the seven network services A to G at the step S12, on the other hand, the control portion 4 advances to a step S13.

At the step S13, the control portion 4 controls the memory portion 14 (see Fig. 2) to add one to the use count of the corresponding one of the seven network services A to G decided by the user, update the date of use thereof and store the same. The control portion 4 so repeats the aforementioned steps S11 to S13 that the memory portion 14 repeatedly stores the use counts and the dates of use of the network services A to G respectively.

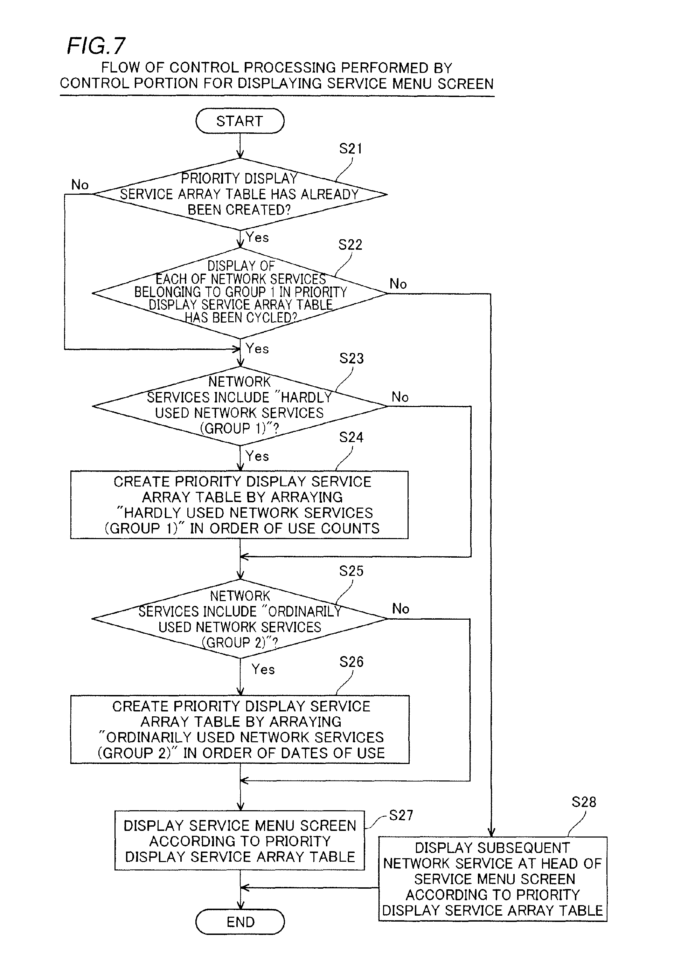

The flow of control processing performed by the control portion 4 of the liquid crystal television set 200 for controlling the display portion 1 to display the service menu screen 1a thereon is now described with reference to Figs. 3, 5 and 7.

At a step S21, the control portion 4 determines whether or not the priority display service array table 14a has already been created. In a case where the user first uses the liquid crystal television set 200 after newly purchasing the same, for example, the control portion 4 determines that the priority display service array table 14a has not yet been created at the step S21, and advances to a step S23.

If determining that the priority display service array table 14a has already been created at the step S21, on the other hand, the control portion 4 advances to a step S22, and determines whether or not each of the three network services A to C belonging to the group 1 of the priority display service array table 14a has been displayed (cycled) at the head (upper left) of the service menu screen 1a.

If determining that each of the three network services A to C belonging to the group 1 of the priority display service array table 14a has been displayed (cycled) at the head (upper left) of the service menu screen 1a at the step S22, the control portion 4 advances to the step S23, and controls the memory portion 14 to recreate (update) the priority display service array table 14a.

At the step S23, the control portion 4 determines whether or not the network services A to G stored in the memory portion 14 include (whether or not the memory portion 14 stores) the "hardly used network services (group 1)". More specifically, the control portion 4 determines whether or not the network services A to G include the network services exhibiting use ratios of at least 0 % and less than 20 % in the case where the use ratio of the most frequently used network service (service G) is 100 %. If determining that the network services A to G include (the memory portion 14 stores) the "hardly used network services (group 1)" at the step S23, the control portion 4 advances to a step S24, and controls the memory portion 14 to create the priority display service array table 14a (see Fig. 5) by arraying the "hardly used network services (group 1)" in the order of the use counts (lowest first). According to this embodiment, the memory portion 14 arrays the network services A, B and C belonging to the group 1 in this order. Then, the control portion 4 advances to a step S25.

If determining that the network services A to G do not include (the memory portion 14 does not store) the "hardly used network services (group 1)" at the step S23, on the other hand, the control portion 4 advances to the step S25.

Then, the control portion 4 determines whether or not the network services A to G include (the memory portion 14 stores) the "ordinarily used network services (group 2)" at the step S25. More specifically, the control portion 4 determines whether or not the network services A to G include the network services exhibiting the use ratios of at least 20 % and less than 80 % in the case where the use ratio of the most frequently used network service (service G) is 100 %. If determining that the network services A to G include (the memory portion 14 stores) the "ordinarily used network services (group 2)" at the step S25, the control portion 4 advances to a step S26, and controls the memory portion 14 to create the priority display service array table 14a (see Fig. 5) by arraying the "ordinarily used network services (group 2)" in the order of the dates of use (oldest first). According to this embodiment, the memory portion 14 arrays the two network services D and E belonging to the group 2 in this order along the dates of use, subsequently to the three network services A to C belonging to the group 1.

If the network services A to G include the network services exhibiting the use ratios of at least 80 % (the network services A to G include (the memory portion 14 stores) the "frequently used network services (group 3)) in the case where the use ratio of the most frequently used network service (service G) is 100 %, the memory portion 14 arrays the two network services F and G belonging to the group 3 without prioritizing the same (at random) regardless of the use counts or the dates of use by the user, subsequently to the two network services D and E belonging to the group 2.

At the step S27, the control portion 4 controls the display portion 1 to display the service menu screen 1a (see Fig. 3) including the icons 1b corresponding to the network services A to G respectively according to the priority display service array table 14a created at the steps S24 and S26. According to this embodiment, the display portion 1 displays the icons 1b corresponding to the network services A to C included in the seven network services A to G in the order of the use counts (lowest first), the icons 1b corresponding to the network services D and F in the order of the dates of use (oldest first) and the icons 1b corresponding to the network services F and G at random regardless of the use counts or the dates of use by the user. The display portion 1 displays the icon 1b corresponding to the network service A least frequently used by the user at the head (upper left) of the service menu screen 1a.

If determining that each of the three network services A to C belonging to the group 1 of the priority display service array table 14a has not been displayed (cycled) at the head (upper left) of the service menu screen 1a at the step S22, on the other hand, the control portion 4 advances to a step S28. At the step S28, the control portion 4 controls the display portion 1 to display the icon 1b, corresponding to the network service exhibiting the use count next lowest to that of the network service currently displayed at the head (upper left) of the service menu screen 1a, at the head (upper left) of the service menu screen 1a on the basis of the priority display service array table 14a. In other words, the display portion 1 displays the icon 1b corresponding to the network service B exhibiting the next lowest use count at the head (upper left) of the service menu screen 1a if the same has first displayed the icon 1b corresponding to the network service A at the head of the service menu screen 1a.

According to this embodiment, as hereinabove described, the control portion 4 controls the display portion 1 to display the service menu screen 1a listing the seven network services A to G in the order of the use counts (lowest first) on the basis of the use counts of the seven network services A to G used by the user so that the display portion 1 can conspicuously display the network services A to C, regarded as less frequently used, exhibiting low use counts among the seven network services A to G, whereby the user's awareness of the network services A to C exhibiting low use counts can be improved. Thus, the network services A to C exhibiting low use counts are easy to select, whereby the user can be prompted to use the network services A to C, regarded as less frequently used, exhibiting low use counts.

According to this embodiment, as hereinabove described, the control portion 4 controls the display portion 1 to display the network services A to C belonging to the group 1 in the order of the use counts (lowest first) so that the display portion 1 can display the network services D and E belonging to the group 2 after conspicuously displaying the network service A exhibiting the lowest use count among the network services A to C, conceivably less frequently used by the user, belonging to the group 1, whereby the user's awareness of the network service A exhibiting the lowest use count can be improved.

According to this embodiment, as hereinabove described, the control portion 4 classifies the network services A to E into the network services A to C, belonging to the group 1, exhibiting the use counts lower than the first threshold set with reference to the network service G exhibiting the highest use count among the network services A to G and into the network services D and E, belonging to the group 2, exhibiting the use counts higher than the first threshold. Thus, the control portion 4 can easily classify the network services A to E into the network services A to C, belonging to the group 1, exhibiting the use counts lower than the first threshold and into the network services D and E, belonging to the group 2, exhibiting the use counts higher than the first threshold with the first threshold set with reference to the network service G exhibiting the highest use count among the seven network services A to G.

According to this embodiment, as hereinabove described, the control portion 4 controls the display portion 1 to display the network services D and E belonging to the group 2 in the order of the dates of use (oldest first) so that the display portion 1 can conspicuously display the network service D, conceivably less frequently used by the user, exhibiting the older data of use in the network services D and E belonging to the group 2, whereby the user's awareness of the network service D, regarded as less frequently used, exhibiting the older data of use in the network services D and E belonging to the group 2 can be improved.

According to this embodiment, as hereinabove described, the control portion 4 controls the display portion 1 to display the network services F and G belonging to the group 3 subsequently to the network services A to C belonging to the group 1 and the network services D and E belonging to the group 2 at random regardless of the use counts or the dates of use by the user, whereby the display portion 1 can display the network services F and G belonging to the group 3 without prioritizing the same.

According to this embodiment, the control portion 4 classifies the seven network services A to G into the group 1 (hardly used network services A to C), the group 2 (ordinarily used network services D and E) and the group 3 (frequently used network services F and G) and controls the display portion 1 to display the group 1 (hardly used network services A to C), the group 2 (ordinarily used network services D and E) and the group 3 (frequently used network services F and G) in this order. Thus, the display portion 1 can display the group 1 (hardly used network services A to C), the group 2 (ordinarily used network services D and E) and the group 3 (frequently used network services F and G) to be conspicuous in this order, whereby the user's awareness of the group 1 (hardly used network services A to C) conceivably less frequently used by him/her can be improved.

According to this embodiment, as hereinabove described, the control portion 4 controls the memory portion 14 to create the priority display service array table 14a by arraying the network services A to C belonging to the group 1 in the order of the use counts (lowest first) and controls the display portion 1 to display the network services A to C in the order of the use counts (lowest first) according to the priority display service array table 14a, whereby the display portion 1 can easily conspicuously display the network service A, conceivably least frequently used by the user, exhibiting the lowest use count among the network services A to C belonging to the group 1 by employing the priority display service array table 14a.

According to this embodiment, as hereinabove described, the control portion 4 controls the memory portion 14 to create the priority display service array table 14a by arraying the network services A to C belonging to the group 1 in the order of the use counts (lowest first) and thereafter arraying the network services D and E belonging to the group 2 in the order of the dates of use (oldest first) and controls the display portion 1 to display the network services A to E according to the priority display service array table 14a when determining that the network services A to G include the network services A to E belonging to the groups 1 and 2, whereby the display portion 1 can easily display the network services A to C, belonging to the group 1, arrayed in the order of the use counts (lowest first) and the network services D and E, belonging to the group 2, arrayed in the order of the dates of use (oldest first).

According to this embodiment, as hereinabove described, the control portion 4 controls the memory portion 14 to create the priority display service array table 14a by arraying the network services D and E belonging to the group 2 in the order of the dates of use (oldest first) and controls the display portion 1 to display the network services D and E according to the priority display service array table 14a when determining that the network services A to G do not include the network services A to C belonging to the group 1, whereby the display portion 1 can easily conspicuously display the network service D, conceivably less frequently used by the user in the network services D and E, belonging to the group 2 according to the priority display service array table 14a.

According to this embodiment, the liquid crystal television set 200 is provided with the memory portion 14 for storing the priority display service array table 14a created from the use counts and the dates of use of the seven network services A to G, whereby the display portion 1 can display the seven network services A to G arrayed in the order of the use counts (lowest first) and the dates of use (oldest first) on the basis of the use counts and the dates of use in the priority display service array stored in the memory portion 14 in the table form.

According to this embodiment, the memory portion 14 stores the seven network services A to G in association with the use counts and the dates of use thereof as the priority display service array table 14a, whereby the display portion 1 can easily display the seven network services A to G arrayed in the order of the use counts (lowest first) and the dates of use (oldest first) on the basis of the use counts and the dates of use associated with the respective ones of the seven network services A to G in the priority display service array table 14a.

According to this embodiment, as hereinabove described, the service menu screen 1a lists the icons 1b corresponding to the seven network services A to G from the head thereof in the order of the use counts (lowest first) or the dates of use (oldest first) of the seven network services A to G so that the network service A exhibiting the lowest use count among the seven network services A to G is displayed at the head of the service menu screen 1a, whereby the display portion 1 can conspicuously display the icon 1b corresponding to the network service A, conceivably least frequently used by the user among the seven network services A to G, exhibiting the lowest use count.

According to this embodiment, as hereinabove described, the control portion 4 controls the display portion 1 to display the network service A exhibiting the lowest use count among the three network services A to C belonging to the group 1 at the head of the service menu screen 1a and to successively display the network services B and C exhibiting the next lowest use counts at the head of the service menu screen 1a as the user operates the remote control 300 to display the service menu screen 1a, whereby the display portion 1 can conspicuously display not only the network service A exhibiting the lowest use count among the three network services A to C but also the network services B and C exhibiting the next lowest use counts among the three network services A to C.

According to this embodiment, as hereinabove described, the memory portion 14 adds one to the use count of the corresponding network service A, B, C, D, E, F or G, updates the date of use and stores the same every time the user uses any of the seven network services A to G, whereby the control portion 4 can control the display portion 1 to display the seven network services A to G arrayed in the order of the use counts (lowest first) and the dates of use (oldest first).

Although the present invention has been described and illustrated in detail, it is clearly understood that the same is by way of illustration and example only and is not to be taken by way of limitation, the spirit and scope of the present invention being limited only by the terms of the appended claims.

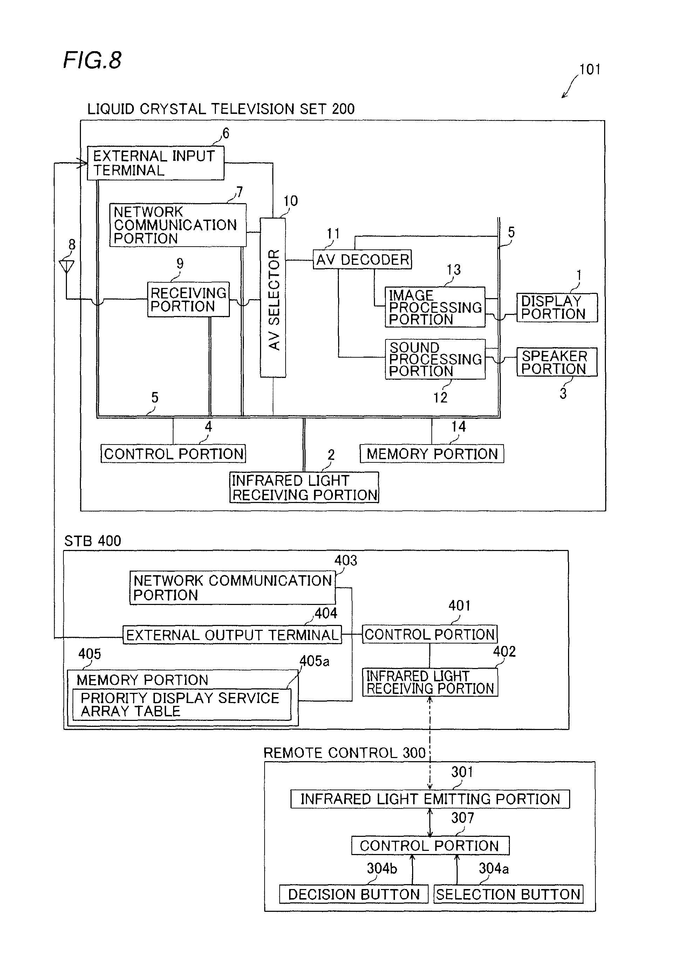

For example, while the liquid crystal television set 200 is employed as the example of the image receiver with a network function according to the present invention in the aforementioned embodiment, the present invention is not restricted to this. The image receiver with a network function according to the present invention may alternatively be applied to an STB (settop box) 400 as in a modification of the embodiment shown in Fig. 8, for example. The STB 400 is an apparatus receiving a broadcast signal of cable television broadcasting or satellite broadcasting and thereafter converting the same to a signal applicable to a general television. In this case, the STB 400 is formed to include a control portion 401 controlling the overall STB 400, an infrared light receiving portion 402 connected to the control portion 401 for communicating with an infrared light emitting portion 301 of a remote control through infrared light, a network communication portion 403 connected to the control portion 401 for receiving seven network services A to G provided by an external service provider, an external output terminal 404 connected to the control portion 401 and a memory portion 405 connected to the control portion 401 for storing use counts or dates of use of the seven network services A to G, as in an image output system 101 according to the modification shown in Fig. 8. The memory portion 405 is an example of the "storage portion" in the present invention. The memory portion 405 is formed to add one to the use count of the corresponding network service A, B, C, D, E, F or G, updates the date of use and stores the same every time the user decides (uses) an icon 1b corresponding to any of the seven network services A to G displayed on a service menu screen 1a (see Fig. 3). The memory portion 405 is also formed to store the use counts and the dates of use in association with the respective ones of the network services A to G as a priority display service array table 405a. The priority display service array table 405a (see Fig. 5) is an example of the "priority display service array" in the present invention. The control portion 401 of the STB 400 is formed to array the seven network services A to G in the order of the use counts (lowest first) or the dates of use (oldest first) on the basis of the use counts and the dates of use of the seven network services A to G stored in the memory portion 405 by an operation similar to that of the control portion 4 of the liquid crystal television set 200 according to the aforementioned embodiment. The control portion 405 may control a display portion 1 of a liquid crystal television set 200 to display the service menu screen 1a listing the seven network services A to G in the order of the use counts (lowest first) or the dates of use (oldest first) through the external output terminal 404 of the STB 400 and an external input terminal 6 of the liquid crystal television set 200.

While the seven network services A to G are employed as the examples of the plurality of network services according to the present invention in the aforementioned embodiment, the present invention is not restricted to this. For example, at least two and not more than six network services or at least eight network services may alternatively be employed, in place of the seven network services A to G.

While the control portion 4 controls the display portion 1 to display the network services A to C exhibiting the use ratios of at least 0 % and less than 20 % with respect to the use count of the network service G most frequently used among the seven network services A to G on the service menu screen 1a as the group 1 in the aforementioned embodiment, the present invention is not restricted to this. For example, the control portion 4 may alternatively be so formed as to control the display portion 1 to display network services exhibiting use counts lower than a prescribed count (10 times, for example) among the seven network services A to G on the service menu screen 1a in the order of the use counts (lowest first). Thus, the control portion 4 can control the display portion 1 to conspicuously display a network service exhibiting a particularly low use count.

While the network communication portion 7 is employed as the example of the communication portion according to the present invention for receiving the network services in the aforementioned embodiment, the present invention is not restricted to this. For example, a communication portion other than the network communication portion may alternatively be employed, so far as the same can receive the network services.

While the user employs the remote control 300 in order to select or decide the service menu screen 1a displayed on the display portion 1 of the liquid crystal television set 200 in the aforementioned embodiment, the present invention is not restricted to this. For example, operation buttons or the like for allowing the user to operate the service menu screen 1a may alternatively be provided on the body of the liquid crystal television set 200.

While the first threshold for dividing the network services into the first and second groups is set to 20 % and the second threshold for dividing the network services into the second and third groups is set to 80 % in the aforementioned embodiment, the present invention is not restricted to this. According to the present invention, first threshold for dividing the network services into the first and second groups may be set to a value other than 20 %, and the second threshold for dividing the network services into the second and third groups may be set to a value other than 80 %.

## Claims

1. An image receiver (200, 400) with a network function, comprising:
a communication portion (7, 403) connected to a network and capable of communicating with an external service provider for receiving a plurality of network services provided by said external service provider through said network; and
a control portion (11, 401) controlling a display portion (1) to display a service menu screen (1a) at least partially displaying said plurality of network services in the order of use counts (lowest first) or the dates of use (oldest first) at least on the basis of the use counts or the dates of use of said plurality of network services used by the user.

2. The image receiver with a network function according to claim 1, wherein
said control portion is formed to classify said plurality of network services at least into a first group exhibiting use counts lower than a first threshold and a second group exhibiting use counts not less than said first threshold and to control said display portion to display said network services belonging to said first group in the order of the use counts (lowest first) and to thereafter display said network services belonging to said second group.

3. The image receiver with a network function according to claim 2, wherein
said first threshold is set with reference to said network service exhibiting the highest use count among said plurality of network services, and
said control portion is formed to classify said plurality of network services at least into said first group exhibiting the use counts lower than said first threshold set with reference to said network service exhibiting the highest use count among said plurality of network services and said second group exhibiting the use counts not less than said first threshold.

4. The image receiver with a network function according to claim 2, wherein
said control portion is so formed as to control said display portion to display said network services belonging to said second group in the order of the dates of use (oldest first).

5. The image receiver with a network function according to claim 2, wherein
said control portion is formed to classify said plurality of network services further into a third group exhibiting use counts not less than a second threshold higher than said first threshold in addition to said first group and said second group and to control said display portion to display said network services belonging to said third group at random regardless of the use counts or the dates of use by the user after displaying said network services belonging to said first group and said network services belonging to said second group.

6. The image receiver with a network function according to claim 5, wherein
said network services belonging to said first group include hardly used network services,
said network services belonging to said second group include ordinarily used network services,
said network services belonging to said third group include frequently used network services, and
said control portion is formed to classify said plurality of network services into said hardly used network services belonging to said first group, said ordinarily used network services belonging to said second group and said frequently used network services belonging to said third group and to control said display portion to display said hardly used network services belonging to said first group, said ordinarily used network services belonging to said second group and said frequently used network services belonging to said third group in this order.

7. The image receiver with a network function according to claim 2, wherein
said control portion is formed to determine whether or not said network services include said network services belonging to said first group, to create a priority display service array (14a, 405a) by arraying at least said network services belonging to said first group in the order of the use counts (lowest first) when determining that said network services include said network services belonging to said first group, and to control said display portion to display said network services in the order of the use counts (lowest first) according to said priority display service array.

8. The image receiver with a network function according to claim 7, wherein
said control portion is formed to determine whether or not said network services include said network services belonging to said first and second groups, to create said priority display service array by arraying said network services belonging to said first group in the order of the use counts (lowest first) and thereafter arraying said network services belonging to said second group in the order of the dates of use (oldest first) when determining that said network services include said network services belonging to said first and second groups, and to control said display portion to display said network services according to said priority display service array.

9. The image receiver with a network function according to claim 7, wherein
said control portion is formed to determine whether or not said network services include said network services belonging to said first group, to create said priority display service array by arraying said network services belonging to said second group in the order of the dates of use (oldest first) when determining that said network services do not include said network services belonging to said first group, and to control said display portion to display said network services in the order of the dates of use (oldest first) according to said priority display service array.

10. The image receiver with a network function according to claim 9, further comprising a storage portion (14, 405) for storing said priority display service array created from the use counts and the dates of use of said network services in a table form.

11. The image receiver with a network function according to claim 10, wherein
said priority display service array in the table form is so formed that said storage portion stores said plurality of network services in association with the use counts and the dates of use thereof respectively.

12. The image receiver with a network function according to claim 1, wherein
said control portion is so formed as to control said display portion to list said plurality of network services on said service menu screen displayed thereon from the head of said service menu screen in the order of use counts (lowest first) or the dates of use (oldest first).

13. The image receiver with a network function according to claim 12, wherein
said control portion is so formed as to control said display portion to display said network service exhibiting the lowest use count among said plurality of network services at the head of said service menu screen and to thereafter successively display said network service exhibiting the next lowest use count among said plurality of network services at the head of said service menu screen every time said display portion displays said service menu screen in response to the user's operation.

14. The image receiver with a network function according to claim 1, wherein
said control portion is so formed as to control said display portion to display said network services exhibiting use counts lower than a prescribed count in the order of the use counts (lowest first) when said plurality of network services include said network services exhibiting the use counts lower than said prescribed count.

15. The image receiver with a network function according to claim 1, further comprising a storage portion (14, 405) for storing use counts and the dates of use of said network services, wherein
said control portion is formed to add one to the use count of used said network service, to update the corresponding date of use and to control said storage portion to store the use count and the date of use every time the user uses any of said plurality of network services.
